# EUROPEAN PATENT APPLICATION

(11) **EP 3 068 004 A1**
(43) Date of publication of application: **14.09.2016**
(21) Application number: 15194537.5
(22) Date of filing: 13.11.2015
(51) Int. Cl.: H02H 3/08, H02H 7/22, H02H 11/00, B60L 3/04, B60L 11/18, H01H 33/00, H01H 47/00

(54) **VEHICLE CHARGING DEVICE AND METHOD FOR PROTECTING INTERNAL CIRCUIT OF THE SAME**

(30) Priority: 11.03.2015 KR 20150033754
(71) Applicant: LSIS Co., Ltd., Anyang-si, Gyeonggi-do 431-848 (KR)
(72) Inventor: IM, Chang Jun, 431-848 Anyang-si, Gyeonggi-do (KR)
(74) Representative: Lang, Johannes

(57) **Abstract**

A vehicle charging device is provided. The vehicle charging device is connected between an external power source and a vehicle and provides power for vehicle charging. The vehicle charging device includes: a sensing unit sensing whether a current to be provided to the vehicle is in a normal range, a relay unit selectively cutting off a current passing through the sensing unit from being supplied to a vehicle side, a bypass unit connected to the relay unit in parallel and selectively configuring a bypass circuit for the current passing through the sensing unit, and a controller controlling operations of the bypass unit and relay unit according to a current value measured through the sensing unit.

## Description

### BACKGROUND

The present disclosure relates to a circuit for protecting an internal circuit from a ground fault current or short circuit current in a vehicle charging device, and particularly, to a device capable of preventing in advance a case where a relay circuit is fused by enabling a bypass path to be rapidly formed by a MOSFET AC switch before an off of a relay circuit.

Electric vehicles mean vehicles run by using electricity and are largely divided into a battery powered electric vehicle and a hybrid electric vehicle. Here, a pure electric vehicle is a vehicle run by using only electricity without using a fossil fuel and is typically called an electric vehicle. In addition, the hybrid electric vehicle means a vehicle run by using electricity and a fossil fuel. In addition, such an electric vehicle includes a battery supplying electricity for running. In particular, the pure electric vehicle and a hybrid electric vehicle in a plug-in type are charged with power supplied from an external power supply and drive an electric motor by using power charged in the battery.

When the electric is charged by using commercial grid power of 60 Hz provided an inlet included in a home or the like, a vehicle charging device is used.

The vehicle charging device of the electric vehicle includes a connector connected to the electric vehicle, a plug connected to the inlet, and a power line connecting the connector and plug.

Since the vehicle charging device is used in various environments, a protection circuit providing stable charging to the electric vehicle may be included in the vehicle charging device. A cable installment type charging control device is bonded as one body together with a power line in order not to be easily separated from the power line by a user. The cable installment type charging control device is necessary to satisfy a requirement that the cable installment charging control device itself is robust to an external temperature, external humidity, a vibration, and an impact, or the like in order to provide stable charging to the electric vehicle.

In particular, the vehicle charging device includes a circuit breaker in order for a ground or short current not to be delivered to the vehicle, but once tripped, the circuit breaker needs to be manually reset.

Accordingly, since a case where a user frequently monitors an operation of the charging device is rare in a situation where long time charging is necessary, when the circuit breaker is tripped and charging is stopped, a usage of the electric vehicle is inconvenient due to an un-charged state.

### SUMMARY

Embodiments provide a device capable of protecting a relay circuit inside a charging device and a protection method thereof when a charging interruption element such as a short circuit or ground fault occurs during charging.

Embodiments also provide a device and method for enabling charging a vehicle with a charging device to be returned to a normal state when the charging interruption element such as the short circuit or ground fault is removed.

In one embodiment, provided is a vehicle charging device connected between an external power source and a vehicle and providing power for vehicle charging. The vehicle charging device includes: a sensing unit sensing whether a current to be provided to the vehicle is in a normal range; a relay unit selectively cutting off a current passing through the sensing unit from being supplied to a vehicle side; a bypass unit connected to the relay unit in parallel and selectively configuring a bypass circuit for the current passing through the sensing unit; and a controller controlling operations of the bypass unit and relay unit according to a current value measured through the sensing unit.

In another embodiment, provided is a method for protecting an internal circuit of a vehicle charging device to enable a current for charging a vehicle to be selectively provided by a switching on or off operation of a relay circuit. The method includes: sensing whether a current provided into the vehicle charging device is abnormal; forming a bypass circuit connected to the relay circuit in parallel as the sensing result; and performing the switching operation of the relay circuit while the bypass circuit is being formed.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating an environment in which a charging device according to an embodiment is used.
Fig. 2 is a view illustrating a vehicle charging device according to an embodiment.
Fig. 3 is a view for explaining a configuration of a bypass unit according to an embodiment.
Fig. 4 is a flowchart for explaining a circuit protection method of a vehicle charging device according to an embodiment.

### DETAILED DESCRIPTION OF THE EMBODIMENTS

Reference will now be made in detail to the embodiments of the present disclosure, examples of which are illustrated in the accompanying drawings.

A vehicle charging device and method for protecting internal circuit of the same according to an embodiment will be described in detail with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure can easily be derived through adding, altering, and changing, and will fully convey the concept of the invention to those skilled in the art.

Hereinafter, embodiments will be described in detail with reference to the accompanying drawings.

An embodiment shows that each of MOSFET AC switches electrically switchable are provided at primary and secondary sides connected to a relay unit that is physically switched, and accordingly, when an overcurrent is flowed into a relay unit due to a ground fault line or a short-circuit line, a bypass path is formed by the MOSFET AC switches before the relay unit mechanically operates.

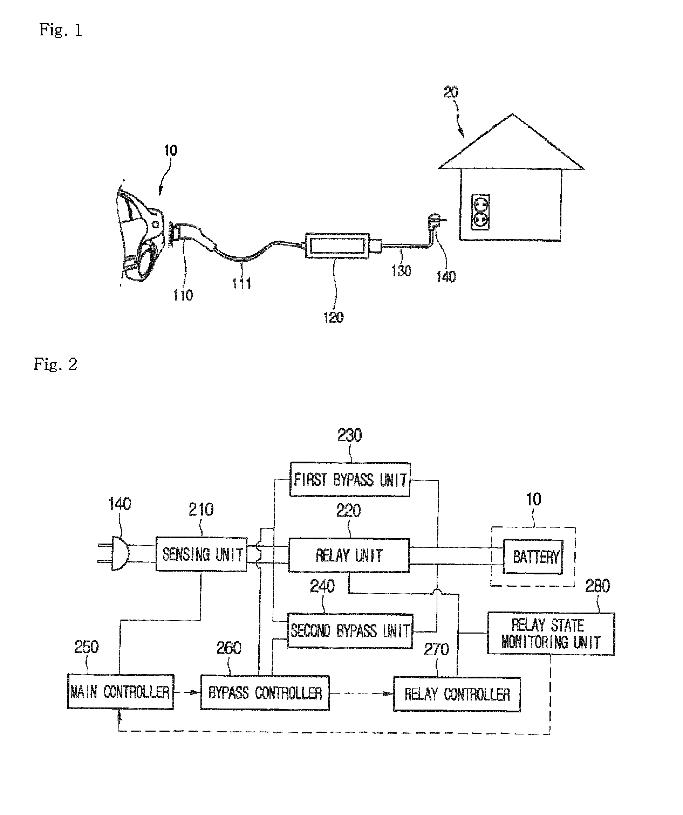

Fig. 1 is a view illustrating an environment in which a charging device according to an embodiment is used.

In Fig. 1, a typical environment using a vehicle charging device is illustrated. The vehicle charging device connects a charging cable between a vehicle 10 and a power inlet in a house 20 to enable a storage battery mounted in a vehicle to be charged by a use power source (e.g., system power source) outside the vehicle. Hereinafter, the power source outside the vehicle may be referred to 'power supply source' or 'external power source', and vehicle charging by the power supply source or external power source may be referred to 'external charging'.

A vehicle charging device of an embodiment may include a Charging Circuit Interrupt Device (CCID) 120 including a relay circuit and pilot circuit, a grid plug 140 connected to an external power source, a grid cable 130 connecting the grid plug 140 and the CCID 120, a coupler 110 connected to a vehicle 10, and a coupler cable 111 connecting the coupler 110 and the CCID 120.

Furthermore, the vehicle 10 include a charging opening to which the coupler 110 is connected, and a charging device for charging power supplied through the coupler 110 and coupler cable 111. In addition, a communication device is provided for communication with the CCID 120 and may communicate with the CCID 120. For example, a state of the vehicle 10 may be delivered to the CCID 120 and comply with a charging related control command of the CCID 120.

In addition, the CCID 120 may perform a control for charging a vehicle by using the external power source, and include a CCID relay capable of cutting off or allowing a supply of the external power source and a pilot circuit for checking a state of a vehicle or external power source.

Here, the CCID relay may be turned on/off by the pilot circuit and the pilot circuit may output a pilot signal to a charging electronic control unit (ECU) of the vehicle 10. In addition, the pilot signal is a signal for detecting a state of the vehicle 10 on the basis of a potential of the pilot signal controlled by the charging ECU and for notifying an allowable current value (regulated current) of a charging cable (grid cable, connector cable) to the charging ECU of the vehicle 10.

In addition, the pilot circuit may control a CCID relay on the basis of a potential change of the pilot signal.

The CCID may be named as a vehicle charging device, and hereinafter, a description will be provided in detail about a method of protecting a circuit of a CCID including a relay circuit or relay unit, namely, the vehicle charging device.

Fig. 2 is a view illustrating a vehicle charging device according to an embodiment.

Referring to Fig. 2, the vehicle charging device includes a sensing unit 210 for monitoring an AC current provided to a vehicle charging device side, a relay unit 220 selectively cutting off power supplying to a vehicle side by using a physical switch device, and a main controller 250 controlling an operation of the relay unit 220 according to the monitored result of current sensed through the sensing unit 210.

In addition, the vehicle charging device of an embodiment includes a pair of bypass units respectively connected in parallel to input and output sides of the relay unit 220, and the bypass units include a first bypass unit 230 and a second bypass unit 240 connected in parallel to the relay unit 220.

In addition, when determining that an overcurrent flows in by the sensing unit 210, the main controller 250 delivers an electric signal for turning on/off operations of the first and second bypass units 240 to the bypass unit 260. In addition, the bypass controller 260 may minimize the overcurrent flowing into the relay unit 220 by turning on the first and second bypass unit 240.

Each of the bypass units includes a pair of MOSFETs for forming a current circuit for an AC current and is an electric switch turned on/off by an electric signal delivered from the bypass controller 260, an operation of which may be rapidly controlled.

In detail, MOSFETs respectively forming the first and second bypass units 230 and 240 are turned on according to a control signal of the bypass controller 260 and accordingly a bypass line is formed which is connected in parallel to the relay unit 220.

When circuit resistance of the relay unit 220 is assumed to be about 100mΩ, the bypass units 230 and 240 formed of the MOSFET AC switches have resistance of about 10mΩ that is a tenth thereof. Accordingly, since a current flows to a bypass unit side that has small resistance, a very small current flows to the relay unit 220.

Accordingly, a time margin of a mechanical switching off of the relay unit 220 is generated by the bypass units 230 and 240.

In addition, while most of the overcurrent flows to the bypass line by turn-on of the bypass units 230 and 240, the bypass controller 270 opens a switch of the relay unit 220 to which the overcurrent does not flow and allows the overcurrent inside the charging device not to be provided to the vehicle side.

The relay controller 270 opens the switch of the relay unit after a time of, for example, 10ms. Through such an operation of each component, a time for allowing the relay unit 220 to be stably opened may be provided, which may free the relay unit 220 from limitations such as mechanical fusing of the switch.

Furthermore, when the AC current sensed by the sensing unit 210 enters a stable range, the main controller 250 turns off the bypass unit through the bypass controller 260 to remove the bypass line, and closes the relay unit through the relay controller 270 to allow normal vehicle charging to be continued. In addition, the main controller 250 may be connected to a relay state monitoring unit 280 connected to the relay unit 220 and may check a relay unit state (e.g., close or open state) delivered from the relay state monitoring unit 280.

As a configuration for controlling operations of circuits inside the vehicle charging device, the main controller, bypass controller, and relay controller are explained in the description above, but the controllers do not necessarily have separate physical configurations and may be implemented as a single chip according to embodiments.

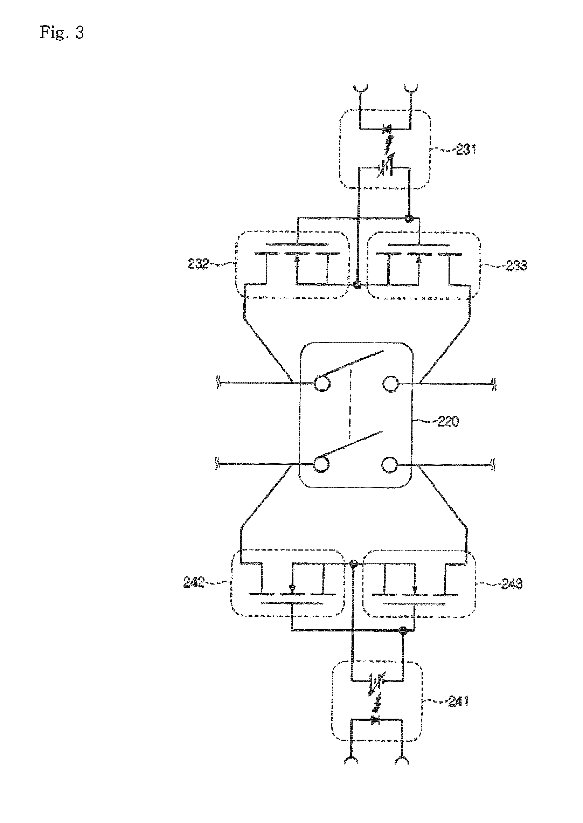

Fig. 3 is a view for explaining a configuration of a bypass unit according to an embodiment.

Referring to Fig. 3, the first and second bypass units 230 and 240 of an embodiment are respectively connected in parallel to input and output sides of the relay unit and include a pair of MOSFET circuits turned on by an electrical signal.

In a case of the first bypass unit 230, sources of the first and second MOSFETs 232 and 233 are connected to each other, and optocouplers, as a reception unit 231 receiving the electrical signal delivered from the bypass controller, may be provided in the first and second MOSFETs 232 and 233.

For example, when the electrical signal is delivered from the bypass controller 260, an LED device that is a light source of the optocoupler emits light and a photo transistor, which is a light detector, is turned on by the emitted light. Then the first and second MOSFETs 232 and 233 connected to the photo transistor is electrically connected to the relay unit 220 in parallel.

The second bypass unit 240 is the same.

A plurality of MOSFET circuits are turned on by the light signal and accordingly the bypass circuit may be rapidly formed at the time of detecting the overcurrent. Furthermore, one side of the photo transistor, which is the light detector forming the optocoupler, is connected to ground and source sides of each MOSFET. Since the AC current flows into the vehicle charging device, the MOSFET may be configured in plurality.

Hereinafter, a circuit protection method by the above-described vehicle charging device is described with reference to a flowchart.

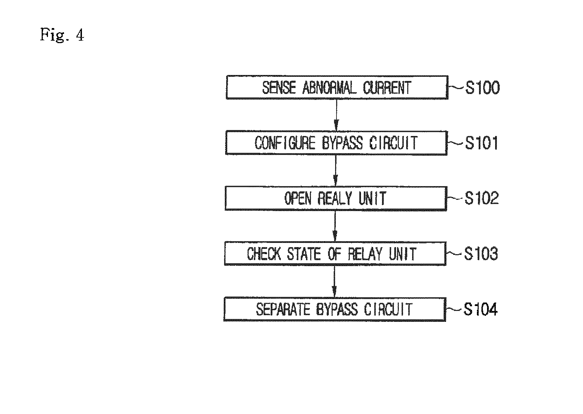

Fig. 4 is a flowchart for explaining a circuit protection method of a vehicle charging device according to an embodiment.

First, the sensing unit 210 senses whether an abnormal current flows inside the charging device (operation S100). For example, it is sensed whether an overcurrent flows which occurs due to a ground fault or short-circuit between a vehicle side and a power supplying source connected to a plug.

In addition, the main controller 250 receives ampere data received from the sensing unit 210 and determines whether to configure a bypass circuit connected to the relay unit in parallel. As the determination result, when it is determined that a circuit is necessary to be protected from the overcurrent, the bypass unit, which is a transistor switch, is turned on by the bypass controller 260 (operation S101).

In addition, due to the turn-on of the bypass unit, while a bypass circuit is being configured, a control signal is delivered to the relay circuit unit 270 to switch off the relay unit 220 (operation S102). Most of the overcurrent flows into the bypass circuit by the bypass unit, and the relay unit stably performs switching-off.

In addition, the main controller 250 checks (operation S203) whether the relay unit 220 is stably switched off, and delivers the control signal to the bypass controller 260 so that the bypass units are turned off (operation S104).

Through this process, a switching operation of the relay unit provided inside the vehicle charging device may be stably performed to prevent a vehicle damage due to relay fusing in advance.

According to embodiments, when an abnormal current such as an overcurrent is provided into a vehicle charging device, it is better in that the overcurrent supplied to a relay circuit side may be rapidly bypassed by an electrical AC switching operation by transistors.

In addition, since a stable switching operation of a relay circuit may be achieved while the overcurrent is bypassed by turn-on of an MOSFET AC switch, an overcurrent generated from fusing of a switch of the relay circuit may be prevented in advance from being supplied to a vehicle.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A vehicle charging device connected between an external power source and a vehicle and providing power for vehicle charging, the vehicle charging device comprising:
a sensing unit(210) sensing whether a current to be provided to the vehicle is in a normal range;
a relay unit(220) selectively cutting off a current passing through the sensing unit from being supplied to a vehicle side;
a bypass unit(230,240) connected to the relay unit in parallel and selectively configuring a bypass circuit for the current passing through the sensing unit; and
a controller controlling operations of the bypass unit and relay unit according to a current value measured through the sensing unit.

2. The vehicle charging device according to claim 1, wherein the bypass unit is configured with two transistors turned on when a current out of a preset normal range is sensed by the sensing unit.

3. The vehicle charging device according to claim 1, wherein the bypass unit comprises first and second bypass units(230,240) connected to the relay unit(220) in parallel.

4. The vehicle charging device according to claim 3, wherein each of the first and second bypass units(230,240) comprises a switch configured with a plurality of MOSFETs.

5. The vehicle charging device according to claim 4, wherein each of the first and second bypass units(230,240) comprises an optocoupler for turning on the plurality of MOSFETs.

6. The vehicle charging device according to claim 1, wherein the controller performs a control enabling a switching-off operation of the relay unit to be performed while the bypass unit maintains a turn-on state.

7. The vehicle charging device according to claim 6, wherein the controller comprises a main controller(250) reading a current value delivered through the sensing unit and determining a turn-on or not of the bypass unit, a bypass controller(260) turning on transistors forming the bypass unit according to a control of the main controller, and a relay controller(270) controlling an operation of the relay unit.

8. A method for protecting an internal circuit of a vehicle charging device to enable a current for charging a vehicle to be selectively provided by a switching on or off operation of a relay circuit, the method comprising:
sensing whether a current provided into the vehicle charging device is abnormal;
forming a bypass circuit connected to the relay circuit in parallel as the sensing result; and
performing the switching operation of the relay circuit while the bypass circuit is being formed.

9. The method according to claim 8, wherein the forming of the bypass circuit comprises turning on first and second bypass units connected to the relay circuit in parallel,
wherein each of the first and second bypass units is configured with a pair of transistors.

10. The method according to claim 9, wherein the first and second bypass units respectively further comprise optocouplers turning on the transistors by an electrical signal.

11. The method according to claim 8, further comprising:
checking a state of the relay circuit; and
separating the bypass circuit when the relay circuit is off.
